# FASCICULE DE BREVET EUROPEEN

(11) **EP 3 387 721 B1**
(45) Date de publication et mention de la délivrance du brevet: **05.02.2020**
(21) Numéro de dépôt: 16819602.0
(22) Date de dépôt: 05.12.2016
(51) Int. Cl.: H02B 1/056

(54) **MEUBLE ELECTRIQUE A DISJONCTEURS MONTES DANS LA PORTE**
SCHALTSCHRANK MIT LEISTUNGSSCHALTERN AUF DER TÜR
ELECTRICAL CABINET WITH CIRCUIT BREAKERS MOUNTED ON THE DOOR

(30) Priorité: 07.12.2015 FR 1561940
(43) Date de publication de la demande: 17.10.2018
(73) Titulaire: Safran Electrical & Power, 31702 Blagnac Cedex (FR)
(72) Inventeur: BOISNIER, Benjamin, 31702 Blagnac Cedex (FR)
(74) Mandataire: Brevalex
(86) Numéro de dépôt international: PCT/FR2016/053202
(87) Numéro de publication internationale: WO 2017/098121

(56) Documents cités:
- FR-A1- 2 746 543
- US-A1- 2014 111 345

## Description

Le sujet de l'invention est un meuble électrique comprenant des disjoncteurs montés dans la porte.

Dans un tel meuble connu, les disjoncteurs sont vissés à travers la porte. Les câbles des circuits électriques passant par les disjoncteurs comportent, outre des parties principales solidaires du corps de meuble, des parties connectées aux disjoncteurs et placées librement dans le volume interne du meuble, de manière qu'elles puissent se déformer et suivre les disjoncteurs quand la porte du meuble est ouverte. Ces parties libres des circuits sont réunies en un faisceau, qu'on appelle harnais, et elles sont unies aux disjoncteurs par des écrous de maintien.

On peut reprocher divers inconvénients à cette conception. Certains sont liés aux risques électriques dus à l'intrusion de corps étrangers, surtout conducteurs, que peuvent notamment devenir des écrous ou vis perdus pendant les montages et démontages. L'utilisation systématique des vissages est encore désavantageuse en ce qu'elle oblige à recourir à des outils particuliers et impose des temps de montage longs. D'autres inconvénients proviennent du harnais des câbles électriques mobiles à l'intérieur du meuble, qui impose encore des précautions de montage, et occupe un volume important.

L'invention permet d'éviter ces inconvénients, en supprimant, partiellement ou complètement, le recours à des liaisons vissées entre la porte, les disjoncteurs et les circuits électriques, de même qu'en permettant la suppression du harnais.

L'art antérieur intéressant est constitué par FR 2 746 543 A1 qui divulgue un meuble électrique comprenant un corps de meuble et une porte mobile sur le corps de meuble entre une position de fermeture du meuble et une position d'ouverture, des disjoncteurs montés sur la porte et s'étendant dans le meuble quand la porte est fermée, et des circuits électriques comprenant chacun une première partie attachée au corps de meuble, et une seconde partie passant par un disjoncteur respectif, et des secondes prises, connectables à des secondes prises complémentaires attachées aux disjoncteurs.

Et US 2014/111345 A1 divulgue des modules individuels et indépendants de disjoncteurs qui sont électriquement et mécaniquement connectés au châssis par des connecteurs mécaniques et électriques.

Sous une forme générale, elle concerne un meuble électrique, comprenant un corps de meuble et une porte mobile sur le meuble entre une position de fermeture du meuble et une position d'ouverture, des disjoncteurs montés sur la porte et s'étendant dans le meuble quand la porte est fermée, et des circuits électriques comprenant chacun une première partie attachée au corps de meuble, et une seconde partie passant par un disjoncteur respectif, caractérisé en ce que les secondes parties sont fixées à la porte et s'étendent entre des premières prises, connectées à des premières prises complémentaires, attachées aux premières parties du circuit, à la position de fermeture, et des secondes prises, connectables à des secondes prises complémentaires attachées aux disjoncteurs.

Le harnais de câbles électriques mobile dans le meuble est donc remplacé par des portions de circuits incorporées à la porte. Leur connexion avec le reste des circuits est rétablie dès que la porte est fermée, en joignant les premières prises aux secondes prises grâce au mouvement de la porte le long de sa trajectoire de fermeture. Il est à noter que l'isolation électrique des disjoncteurs est obtenue elle aussi automatiquement, dès que la porte est ouverte, ce qui est très avantageux pour la sécurité, les remplacements des disjoncteurs, par exemple, pouvant s'effectuer sans risque.

De plus, dans des réalisations préférées de l'invention, les disjoncteurs sont montés par un mouvement coulissant dans des alvéoles formés sur la face interne de la porte, et ce mouvement s'accompagne d'une connexion automatique des secondes prises qui les relient aux circuits électriques. On obtient donc encore un montage beaucoup plus sûr et facile, en renonçant aux connexions vissées entre les disjoncteurs et les circuits électriques.

Si la porte comporte de tels alvéoles de guidage des interrupteurs, la porte et les interrupteurs peuvent comporter des moyens d'encliquetage mutuel. L'encliquetage permet de se passer de la liaison des disjoncteurs à la porte par vissage et améliore donc grandement la facilité de montage, qu'il est possible de réaliser sans outils, ainsi que la sécurité, en évitant la perte d'objets dans le meuble pendant le vissage.

Avantageusement, les secondes parties des circuits sont encastrées dans la porte, qui a une structure feuilletée à couches superposées, les secondes parties pouvant comporter soit des barres collectrices, soit des circuits imprimés, et pouvant alors aussi être incorporées soit à des couches intermédiaires de ladite structure soit à des faces internes de couches extrêmes de ladite structure.

Parmi d'autres réalisations particulières avantageuses de l'invention, on peut citer celles qui comprennent une charnière reliant une extrémité de la porte au corps de meuble, et où la porte comprend une poignée de verrouillage munie d'un relief en imbrication avec un relief complémentaire fixé au corps de meuble à une position de fermeture et de verrouillage de la porte.

Ces diverses variantes de réalisation de l'invention, ainsi que d'autres qu'on décrira ensuite, peuvent en général être combinés librement entre elles, comme défini dans les revendications annexées.

L'invention sera maintenant décrite plus en détail au moyen des figures suivantes, qui en décrivant une réalisation préférée, mais purement illustrative :
- la figure 1 illustre un meuble à l'état fermé ;
- la figure 2, la face interne de sa porte et la disposition des disjoncteurs ;
- la figure 3, les étapes de montage ou de démontage de disjoncteurs ;
- la figure 4, la façon dont les disjoncteurs sont montés par encliquetage ;
- la figure 5, l'insertion des embouts des disjoncteurs à travers la porte ;
- la figure 6, la façon dont les disjoncteurs sont connectés électriquement ;
- la figure 7, un disjoncteur isolé ;
- la figure 8, un alvéole de montage de disjoncteur ;
- la figure 9, les constituants de la structure de la porte, incluant les constituants de circuits électriques ;
- la figure 10, un de ces constituants électriques ;
- la figure 11, une partie de l'assemblage des constituants ;
- la figure 12, la connexion mécanique et électrique à l'état fermé de la porte ;
- la figure 13, la déconnexion à l'ouverture de la porte ;
- et la figure 14, une vue complémentaire du meuble à l'ouverture de la porte.

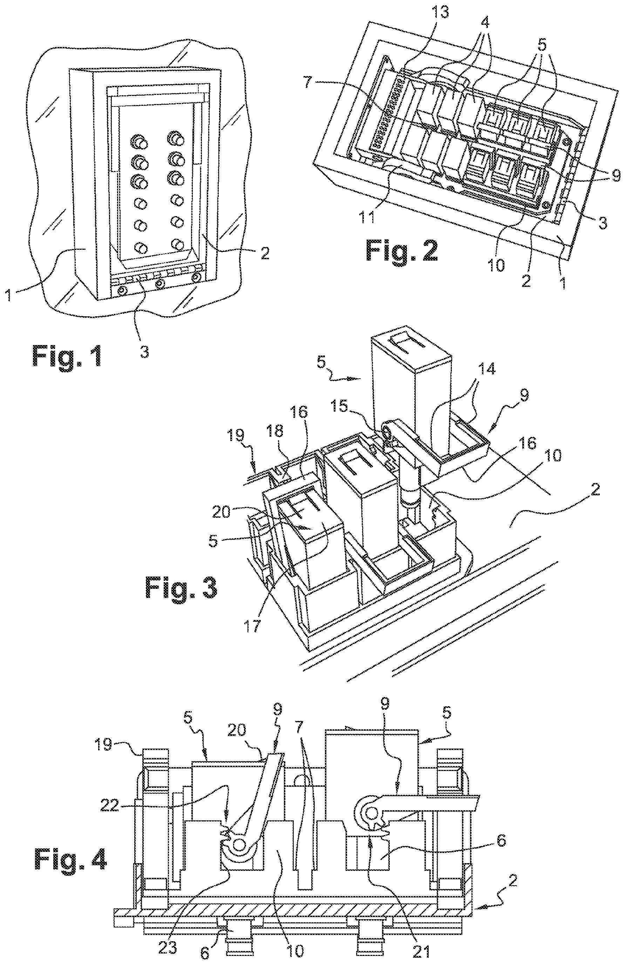

Les figures 1 et 2 montrent une réalisation de meuble conforme à l'invention. Le meuble comprend un corps de meuble 1 de section rectangulaire et une porte 2, reliée au corps de meuble 1 par une charnière 3 et pouvant prendre une position de fermeture, représentée à la figure 1, où elle s'étend devant une ouverture du corps de meuble 1. Le corps de meuble 1 peut être fixé à une structure quelconque et non représentée en détail, comme une paroi d'aéronef, par exemple, mais l'invention n'est pas limitée à un domaine technique particulier. Le volume interne du meuble, que clôt la porte 2, peut être empli par divers équipements et circuits électriques. La porte 2, dont la figure 2 illustre la face interne, soutient des disjoncteurs 4 et 5, au nombre de six chacun dans cette réalisation, qui sont abrités dans le volume interne au meuble quand la porte 2 est fermée, et munis d'embouts 6, qui traversent la porte 2 et pointent donc à l'extérieur du meuble. Dans ce mode de réalisation, les disjoncteurs 4 et 5 sont de deux types : les disjoncteurs 4 sont serrés sur des embases 7 saillant sur la face interne de la porte 2, en vissant des écrous 8 autour de leurs embouts 6 depuis l'extérieur du meuble, conformément à un mode de fixation classique ; mais les disjoncteurs 5 sont plus caractéristiques de l'invention : ils sont munis de leviers 9 d'encliquetage qui permettent de les retenir en place, sur des embases 7 conformes à celles qui précèdent, après qu'ils ont toutefois été engagés dans des alvéoles 10 de guidage. Leurs embouts 6 n'ont pas alors besoin d'être vissés à la porte 2.

La porte 2 comprend encore, à l'extérieur, une poignée 11 de verrouillage au corps de meuble 1, située à l'opposé de la charnière 3 et encliquetée en position de verrouillage sur une patte d'encliquetage 12. Et la face interne de la porte 2 comporte, non loin de la poignée 11, une prise mobile 13 électrique.

Les figures 3 à 8 illustrent les disjoncteurs 5 et leur montage mécanique et électrique dans la porte 2. Les leviers 9 comprennent deux bras 14 basculants, mobiles autour d'articulations 15 alignées et situées de deux côtés opposés des disjoncteurs 5, et une chape 16 reliant les bras 14. Le disjoncteur 5 à droite de la figure 3 va être inséré dans son alvéole 10 (ou vient d'en être extrait), et le levier 9 est rabattu de côté ; le disjoncteur 5 du milieu est en place dans son alvéole 10, mais n'est pas monté dans la porte 2 ; et le levier 9 du disjoncteur 5 de gauche a été relevé, la chape 16 surmontant sa face supérieure 17, jusqu'à passer par-dessus une patte d'encliquetage 20, qui retient alors la chape 16 contre une barrette 18 appartenant à une cage 19 regroupant les alvéoles 10, ce qui retient le levier 9 immobile, tant qu'on n'a pas appuyé sur la patte d'encliquetage 20 pour le libérer.

La figure 4 montre que, dans cette situation, des secteurs dentés 21 des bras 14 du levier 9 sont maintenus en engrènement avec les dents de crémaillères 22, établies sur une face latérale d'entailles 23 de l'alvéole 10 correspondant, ces entailles 23 s'enfonçant perpendiculairement à l'épaisseur de la porte 2, en maintenant ainsi les secteurs dentés 21 sous les crémaillères 22 et empêchant ainsi l'extraction des disjoncteurs 5 enfoncés dans les alvéoles 10, bien qu'aucun écrou ne soit vissé à l'embout 6. Mais si le levier 9 est basculé de côté, comme on l'a représenté au disjoncteur de droite de la figure 4, les dents des secteurs 21 et des crémaillères 22 se disjoignent et s'éloignent suffisamment pour qu'on puisse extraire les disjoncteurs 5, puis les remettre dans leur alvéole 10.

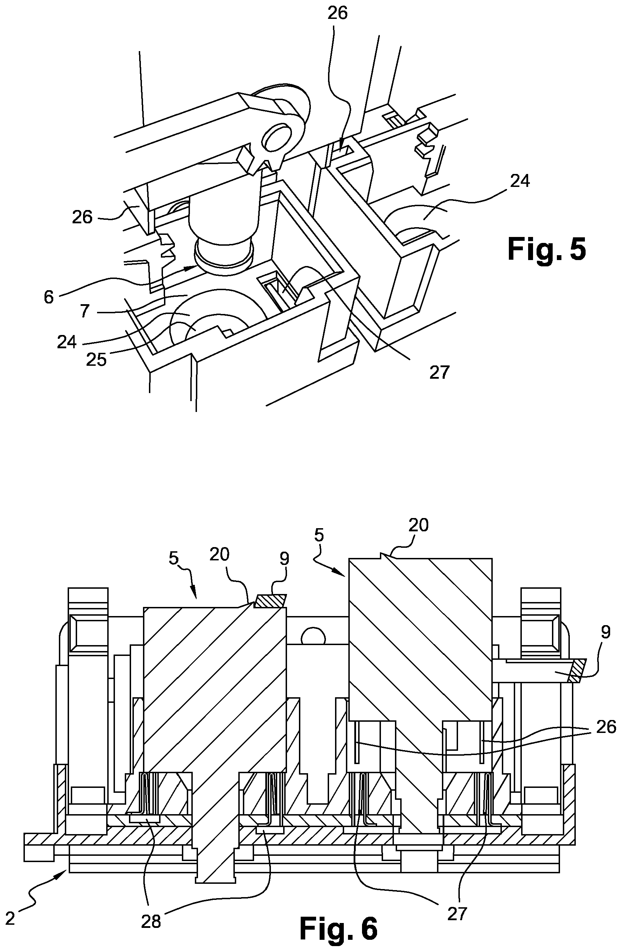

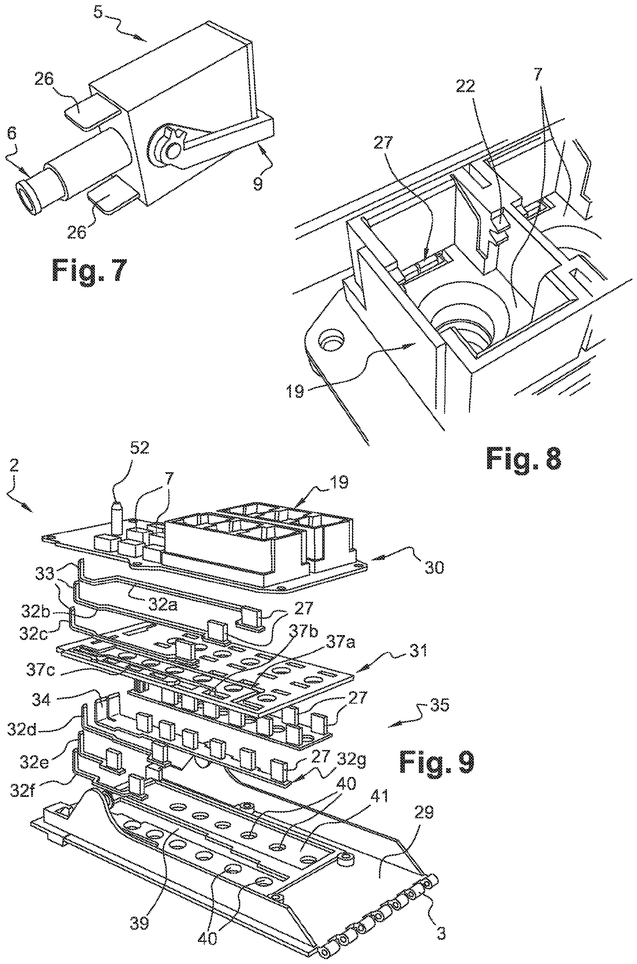

La figure 5 montre que les embases 7 sont traversées par un cône de centrage 24 qui permet de guider l'embout 6 à travers un perçage 25 le prolongeant et traversant la porte 2. Elle montre aussi que les disjoncteurs 5 comportent des portions de prises électriques, sous forme de languettes 26 rigides, de part et d'autre de l'embout 6 et dirigées vers la même direction que lui, qui s'enfoncent dans des entailles abritant des portions complémentaires des prises qui sont des contacts souples 27, reliés à des portions mobiles 28 des circuits électriques passant par les disjoncteurs 4 et 5. Ces portions mobiles 28 sont encastrées dans la porte 2, qui, comme on le voit aux figures 6 et 9, a une structure feuilletée en différentes couches, entre lesquelles les portions mobiles 28 des circuits s'étendent, en étant isolées les unes des autres sans affleurer à l'extérieur du meuble ni dans le volume interne de celui-ci. Plus généralement, un aspect avantageux de modes de réalisation analogues de l'invention est, en coopération avec les alvéoles 10 de guidage des disjoncteurs 5, une construction des portions conductrices des prises et des prises complémentaires avec une extension principale dans la direction de guidage des disjoncteurs 5 par les alvéoles 10 et une disposition face à face, de manière que les portions conductrices attachées aux disjoncteurs 5 glissent sur les portions conductrices attachées à la porte 2 pendant la fin du mouvement d'insertion des disjoncteurs 5, ce qui garantit la bonne connexion. Les portions conductrices peuvent être des broches, des languettes, des fourreaux, etc., élastiques ou rigides.

Et les moyens d'encliquetage tels les leviers 9 permettent aussi de garantir le maintien de la connexion quelle que soit la forme des portions conductrices de connexion des disjoncteurs 5, en maintenant ceux-ci à une position invariable.

Une même disposition peut avantageusement être retenue pour les prises et prises complémentaires (la patte d'encliquetage 12 et la prise mobile 13) qui raccordent les portions du circuit électrique liées à la porte 2 et au corps de meuble 1 quand la porte 2 est fermée : ces éléments ont une direction d'extension principale dans la direction de fermeture et d'ouverture de la porte 2.

Des constructions différentes des prises, comprenant des appuis de contacts plans ou de lames souples par exemple, restent néanmoins possibles et restent dans la définition de l'invention.

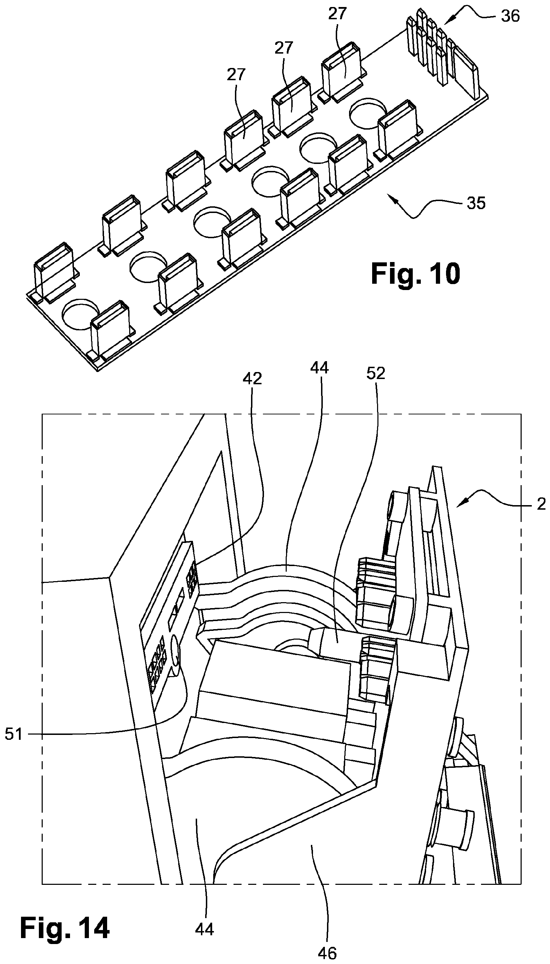

Une réalisation de la porte 2 est représentée en détail à la figure 9. La porte 2 comprend une plaque principale 29 porteuse de la charnière 3, une plaque supérieure 30, porteuse de la cage 19 et des embases 7 ainsi que d'un pion de centrage 52 sur lequel on reviendra, et une plaque intermédiaire 31 s'étendant entre les précédentes, pour former sa structure. Elle comprend encore :
- un premier groupe de trois barres collectrices 32a, 32b et 32c, et un second groupe de trois barres collectrices 32d, 32e et 32f, lesdites barres s'étendant chacune entre un des contacts souples 27 et une broche de connexion 33 ;
- une grande barre collectrice 32g, porteuse de six portions des contacts souples 27 à la fois et d'une broche 34 ; et
- un circuit imprimé 35 (représenté au mieux à la figure 10) porteur de douze portions des contacts souples 27 et de broches 36.

Les barres collectrices 32a à 32f sont toutes de formes et notamment de longueurs différentes, et sinueuses. Celles du premier groupe 32a, 32b et 32c sont logées dans des rainures 37a, 37b et 37c, établies à la surface de la plaque intermédiaire 31 de manière à y rester logées, les contacts souples 27 et les broches 33 saillant vers le dehors. Les formes irrégulières et sinueuses permettent de retenir les barres collectrices 32a, 32b et 32c en place, tout en leur évitant de se croiser, en contournant aussi les perçages 38 de passage des embouts 6. Les barres collectrices 32d, 32e et 32f de l'autre groupe sont de même établies dans des rainures qui leur sont associées mais au-dessous des précédentes, à la surface de la plaque principale 29, sans que ces rainures soient représentées en détail. La barre collectrice 32g est logée dans une autre rainure 39, de forme adaptée à la recevoir avec peu de jeu, à la surface de la face principale 29 entre les deux rangées de six perçages 40 de passage des embouts 6. Et le circuit imprimé 35 est aussi logé dans une rainure 41 de la plaque principale 29 de forme adaptée à le recevoir avec peu de jeu, cette rainure s'étendant au-dessus d'une des rangées de perçages 40.

La plaque intermédiaire 31 comprend des perçages pour les contacts souples 27d, les broches 33, 34 et 36 des barres collectrices 32d, 32e, 32f, 32g et du circuit imprimé 35. Et la plaque supérieure 30 comprend de même des perçages pour les mêmes éléments, ainsi que pour les contacts souples 27 et les broches du premier groupe de barres collectrices 32a, 32b et 32c de celles des trois collectrices 32a, 32b et 32c.

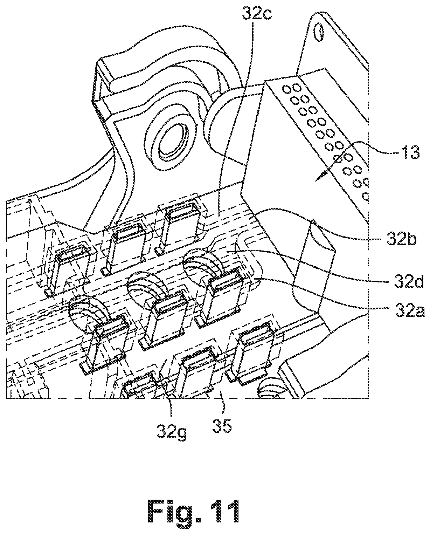

La figure 11 représente une partie de l'assemblage obtenu. On voit que les broches 33, 34 et 36 sont des portions de la prise mobile 13.

Il est manifeste que bien d'autres dispositions sont possibles pour loger ces portions de circuits électriques au sein de la porte 2, l'agencement représenté n'étant qu'un exemple. Le nombre de la répartition et la disposition des disjoncteurs 4 et 5 peuvent de même être choisis assez arbitrairement. Les disjoncteurs 4 ont les mêmes propriétés que les disjoncteurs 5, si ce n'est qu'ils sont dépourvus des leviers 9.

La description des dernières figures de cette description est maintenant entreprise.

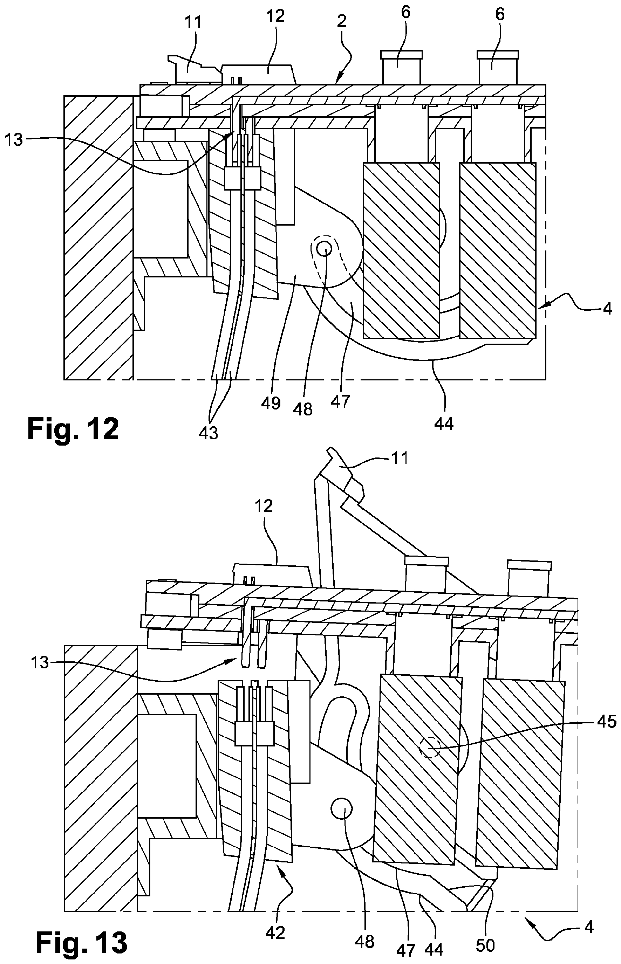

La figure 12 illustre en coupe le meuble à l'état de fermeture de la porte, et de verrouillage par encliquetage avec la patte 12. On remarque que les broches de la prise mobile 13 sont engagées dans une prise fixe 42 complémentaire, à l'intérieur du corps de meuble 1 et à laquelle aboutissent des premières portions des circuits électriques menant aux disjoncteurs 4 et 5, consistant en des câbles fixes 43. Les harnais traditionnels de câbles mobiles dans le meuble sont donc supprimés et remplacés par les constituants électriques déjà décrits, solidaires de la porte 2.

Pour couvrir la porte 2 et passer à l'état représenté à la figure 13, il faut dégager la poignée 11 de la patte d'encliquetage 12 et faire tourner la porte 2 autour de la charnière 3, ce qui sépare la prise mobile 13 de la prise fixe 42, isole les disjoncteurs 4 et 5 du reste de l'appareillage électrique et permet de les manipuler sans crainte et sans plus de précaution. L'ouverture de la porte 2 s'effectue en basculant la poignée 11 d'un angle suffisant, de manière à faire tourner des joues latérales 44 qu'elle porte, et qui sont situées des deux côtés du corps de meuble 1, autour d'axes d'articulation 45 montés sur des flasques 46 de la porte 2 : les joues latérales 44 portent des rainures 47 en spirale dans lesquelles des pions 48, érigés sur des flasques 49 du corps de meuble 1 peuvent pénétrer. A l'état de fermeture de la figure 12, les pions 48 sont au fond des rainures en spirale 47, et des tentatives de faire basculer la porte 2 pour l'ouvrir directement seraient infructueuses, puisque les pions 48 toucheraient les flancs des rainures 47. Mais à mesure que la poignée 11 bascule, les rainures 47 glissent le long des pions 48, jusqu'à ce que ceux-ci atteignent une partie débouchante 50 des rainures 47 correspondant à la partie spiralée : il est alors possible de dégager la poignée 11, en ouvrant franchement la porte 2.

La refermeture de la porte 2 se fait par une opération inverse. On remarquera que le pion de centrage 52 entre dans un creux 51 correspondant de la prise fixe 42, ce qui assure la bonne correspondance de la prise mobile 13 sur la prise fixe 42.

## Revendications

1. Meuble électrique, comprenant un corps de meuble (1) et une porte (2) mobile sur le corps de meuble entre une position de fermeture du meuble et une position d'ouverture, des disjoncteurs (4, 5) montés sur la porte et s'étendant dans le meuble quand la porte est fermée, et des circuits électriques comprenant chacun une première partie (43) attachée au corps de meuble, et une seconde partie passant par un disjoncteur respectif et comprenant des secondes prises (27), connectables à des secondes prises complémentaires (26) attachées au disjoncteur (4,5), **caractérisé en ce que** les secondes parties (32, 34, 35) sont fixées à la porte et s'étendent entre des premières prises (33, 34, 36 ; 13), connectables à des premières prises complémentaires (42), attachées aux premières parties (43) des circuits, à la position de fermeture de la porte (2).

2. Meuble électrique selon la revendication 1, **caractérisé en ce que** la porte comporte des alvéoles (10) de guidage des disjoncteurs (5), et la porte et les disjoncteurs (5) comportent des moyens (9, 21, 22, 23) d'encliquetage mutuel.

3. Meuble électrique selon la revendication 2, **caractérisé en ce que** les moyens d'encliquetage comprennent des leviers (9) basculants.

4. Meuble électrique selon la revendication 3, **caractérisé en ce que** les leviers basculants sont montés sur les disjoncteurs (5) et comprennent chacun un secteur denté (21) autour d'un axe d'articulation (15), qui engrène avec une crémaillère dentée (22) formée dans une entaille (23) adjacente à un alvéole (10) respectif.

5. Meuble électrique selon l'une quelconque des revendications 1 à 4, **caractérisé en ce que** les secondes parties (32, 34, 35) des circuits sont encastrées dans la porte (2), qui a une structure feuilletée à couches (29, 30, 31) superposées.

6. Meuble électrique selon la revendication 5, **caractérisé en ce que** les secondes parties comportent soit des barres collectrices (32, 34) soit des circuits imprimés (35).

7. Meuble électrique selon la revendication 5 ou 6, **caractérisé en ce que** les secondes parties sont incorporées soit à des couches intermédiaires de ladite structure soit à des faces internes de couches extrêmes de ladite structure.

8. Meuble électrique selon l'une quelconque des revendications 1 à 7, **caractérisé en ce qu'**il comprend une charnière (3) reliant une extrémité de la porte au corps de meuble, et la porte comprend une poignée (11) de verrouillage munie d'un relief en imbrication avec un relief complémentaire du corps de meuble, à une position de fermeture et de verrouillage de la porte.

9. Meuble électrique selon la revendication 8, **caractérisé en ce qu'**il comprend des moyens complémentaires d'encliquetage sur la poignée (11) et la porte (2), quand la porte est à la position de verrouillage.

10. Meuble électrique selon la revendication 8, **caractérisé en ce qu'**il comprend des moyens de centrage (51, 52) répartis sur la porte et le corps de meuble, et venant en contact mutuel à la position de fermeture.

11. Meuble électrique selon la revendication 2, **caractérisé en ce que** les secondes prises (27) et les secondes prises complémentaires (26) comprennent des portions conductrices s'étendant principalement dans une direction de guidage des disjoncteurs (5) par les alvéoles (10), lesdites portions conductrices des secondes prises complémentaires (26) glissant sur lesdites portions conductrices des secondes prises (27).

12. Meuble électrique selon la revendication 2, **caractérisé en ce que** les premières prises (33, 34, 36 ; 13) et les premières prises complémentaires (42) comprennent des portions conductrices s'étendant principalement dans une direction de guidage des disjoncteurs (5) par les alvéoles (10) de fermeture de la porte (2), lesdites portions conductrices des premières prises complémentaires (42) glissant sur lesdites portions conductrices des premières prises (33, 34, 36 ; 13).

## Patentansprüche

1. Schaltschrank, mit einem Schrankkörper (1) und einer Tür (2), die auf dem Schrankkörper zwischen einer Schließstellung des Schranks und einer Öffnungsstellung bewegbar ist, Leistungsschaltern (4, 5), die auf der Tür angebracht sind und sich in dem Schrank erstrecken, wenn die Tür geschlossen ist, sowie elektrischen Schaltkreisen mit jeweils einem am Schrankkörper befestigten ersten Teil (43) und einem zweiten Teil, der durch einen jeweiligen Leistungsschalter hindurch geht und zweite Stecker (27) aufweist, welche mit an dem Leistungsschalter (4, 5) befestigten, zweiten komplementären Steckern (26) verbindbar sind,
**dadurch gekennzeichnet, dass** die zweiten Teile (32, 34, 35) an der Tür befestigt sind und in der Schließstellung der Tür (2) zwischen ersten Steckern (33, 34, 36; 13) verlaufen, die mit ersten komplementären Steckern (42) verbindbar sind, welche an den ersten Teilen (43) der Schaltkreise befestigt sind.

2. Schaltschrank nach Anspruch 1, **dadurch gekennzeichnet, dass** die Tür Führungsrahmen (10) der Leistungsschalter (5) aufweist und die Tür und die Leistungsschalter (5) Mittel (9, 21, 22, 23) zum gegenseitigen Einrasten aufweisen.

3. Schaltschrank nach Anspruch 2, **dadurch gekennzeichnet, dass** die Rastmittel Kipphebel (9) aufweisen.

4. Schaltschrank nach Anspruch 3, **dadurch gekennzeichnet, dass** die Kipphebel auf den Leistungsschaltern (5) angebracht sind und jeweils ein Zahnsegment (21) um eine Drehachse (15) herum enthalten, das in eine Zahnstange (22) eingreift, welche in einem, an einen entsprechenden Rahmen (10) angrenzenden Einschnitt (23) ausgebildet ist.

5. Schaltschrank nach einem der Ansprüche 1 bis 4, **dadurch gekennzeichnet, dass** die zweiten Teile (32, 34, 35) der Schaltkreise in die Tür (2) eingelassen sind, welche einen aus übereinanderliegenden Schichten (29, 30, 31) bestehenden Aufbau aufweist.

6. Schaltschrank nach Anspruch 5, **dadurch gekennzeichnet, dass** die zweiten Teile entweder Sammelschienen (32, 34) oder gedruckte Schaltungen (35) aufweisen.

7. Schaltschrank nach Anspruch 5 oder 6, **dadurch gekennzeichnet, dass** die zweiten Teile entweder in Zwischenschichten dieses Aufbaus oder an Innenflächen der Außenschichten dieses Aufbaus eingebaut sind.

8. Schaltschrank nach einem der Ansprüche 1 bis 7, **dadurch gekennzeichnet, dass** er ein Scharnier (3) umfasst, welches ein Ende der Tür mit dem Schaltschrank verbindet, und die Tür in einer Schließ- und Verriegelungsstellung der Tür einen Verriegelungsgriff (11) umfasst, der mit einem Relief in Verzahnung mit einem komplementären Relief des Schaltschranks versehen ist.

9. Schaltschrank nach Anspruch 8, **dadurch gekennzeichnet, dass** dieser komplementäre Rastmittel auf dem Griff (11) und der Tür (2) aufweist, wenn sich die Tür in der Verriegelungsstellung befindet.

10. Schaltschrank nach Anspruch 8, **dadurch gekennzeichnet, dass** dieser Zentriermittel (51, 52) umfasst, welche auf der Tür und dem Schaltschrank verteilt sind und in der Schließstellung in wechselseitigen Kontakt treten.

11. Schaltschrank nach Anspruch 2, **dadurch gekennzeichnet, dass** die zweiten Stecker (27) und die zweiten komplementären Stecker (26) leitende Abschnitte aufweisen, die sich hauptsächlich in eine Führungsrichtung der Leistungsschalter (5) durch die Rahmen (10) erstrecken, wobei die leitenden Abschnitte der zweiten komplementären Stecker (26) auf den leitenden Abschnitten der zweiten Stecker (27) gleiten.

12. Schaltschrank nach Anspruch 2, **dadurch gekennzeichnet, dass** die ersten Stecker (33, 34, 36; 13) und die ersten komplementären Stecker (42) leitende Abschnitte aufweisen, die sich hauptsächlich in einer Führungsrichtung der Leistungsschalter (5) durch die Schließrahmen (10) der Tür (2) erstrecken, wobei die leitenden Abschnitte der ersten komplementären Stecker (42) auf den leitenden Abschnitten der ersten Stecker (33, 34, 36; 13) gleiten.

## Claims

1. An electrical cabinet, comprising a cabinet body (1) and a door (2) movable on the cabinet body between a cabinet closing position and an opening position, circuit breakers (4, 5) mounted to the door and extending in the cabinet when the door is closed, and electrical circuits each comprising a first part (43) attached to the cabinet body, and a second part passing through a respective circuit breaker comprising second connectors (27), connectable to second complementary connectors (26) attached to the circuit breaker (4, 5), **characterised in that** the second parts (32, 34, 35) are fastened to the door and extend between first connectors (33, 34, 36; 13), connectable to first complementary connectors (42), attached to the first parts (43) of the circuits, in the door closing position.

2. The electrical cabinet according to claim 1, **characterised in that** the door includes cells (10) for guiding the circuit breakers (5), and the door and the circuit breakers (5) include interlocking means (9, 21, 22, 23).

3. The electrical cabinet according to claim 2, **characterised in that** the interlocking means comprise rock levers (9).

4. The electrical cabinet according to claim 3, **characterised in that** the rock levers are mounted to the circuit breakers (5) and include each a sector gear (21) about a hinge pin (15), which meshes with a toothed rack (22) formed in a notch (23) adjacent to a respective cell (10).

5. The electrical cabinet according to any of claims 1 to 4, **characterised in that** the second parts (32, 34, 35) of the circuits are built in the door (2), which has a laminated structure with superimposed layers (29, 30, 31).

6. The electrical cabinet according to claim 5, **characterised in that** the second parts include either bus bars (32, 34) or printed circuits (35).

7. The electrical cabinet according to claim 5 or 6, **characterised in that** the second parts are incorporated either to intermediate layers of said structure or to inner faces of end layers of said structure.

8. The electrical cabinet according to any of claims 1 to 7, **characterised in that** it comprises a hinge (3) connecting one end of the door to the cabinet body, and the door comprises a latching handle (11) provided with a relief nested with a complementary relief of the cabinet body, in a closing and latching position of the door.

9. The electrical cabinet according to claim 8, **characterised in that** it comprises complementary interlocking means on the handle (11) and the door (2), when the door is in the latching position.

10. The electrical cabinet according to claim 8, **characterised in that** it comprises centring means (51, 52) distributed on the door and the cabinet body, and mutually contacting in the closing position.

11. The electrical cabinet according to claim 2, **characterised in that** the second connectors and the second complementary connectors comprise conducting portions mainly extending in a direction of guiding the circuit breakers by the cells, said conducting portions of the second complementary connectors sliding on said conducting portions of the second connectors.

12. The electrical cabinet according to claim 1, **characterised in that** the first connectors and the first complementary connectors comprise conducting portions mainly extending in a direction of guiding the circuit breakers by the cells for closing the door (2), said conducting portions of the first complementary connectors sliding on said conducting portions of the first connectors.
